# FASCICULE DE BREVET EUROPEEN

(11) **EP 2 065 713 B1**
(45) Date de publication et mention de la délivrance du brevet: **11.08.2010**
(21) Numéro de dépôt: 08169823.5
(22) Date de dépôt: 24.11.2008
(51) Int. Cl.: G01P 15/12

(54) **Dispositif à détection par jauge de contrainte piézorésisitive suspendue comportant une cellule d'amplification de contrainte**
Erfassungsvorrichtung mittels aufgehängtem Dehnungsmesser mit piezoelektrischem Widerstand, der eine Dehnungsverstärkungszelle umfasst
Detection device with a hanging piezoresistive strain gauge comprising a strain amplification cell

(30) Priorité: 30.11.2007 FR 0759468
(43) Date de publication de la demande: 03.06.2009
(73) Titulaire: Commissariat à l'Énergie Atomique et aux Énergies Alternatives, 75015 Paris (FR)
(72) Inventeur: Robert, Philippe, 38000, GRENOBLE (FR); Hentz, Sébastien, 38000, GRENOBLE (FR)
(74) Mandataire: Ilgart, Jean-Christophe

(56) Documents cités:
- EP-A- 0 938 143
- US-A- 5 542 297
- US-B1- 6 389 899

## Description

### DOMAINE TECHNIQUE ET ART ANTÉRIEUR

L'invention concerne le domaine des microcomposants ou des nanocomposants, notamment en silicium, par exemple des capteurs inertiels, notamment des accéléromètres, des gyromètres ou des capteurs de force, des capteurs chimiques résonants, et des résonateurs.

Elle trouve application dans des domaines variés, tels que l'automobile, la téléphonie mobile ou l'avionique, pour former par exemple une base de temps ou réaliser un filtrage mécanique.

De manière connue, les capteurs résonants peuvent être réalisés :
- soit en technologie de volume, auquel cas l'élément sensible du capteur est réalisé sur toute l'épaisseur d'un substrat en silicium ou en quartz par des étapes de gravure humide,
- soit en technologie de surface, auquel cas le substrat de silicium est usiné uniquement sur une fraction de son épaisseur, par exemple comprise entre quelques micromètres et quelques dizaines de micromètres. Le document « Resonant accelerometer with self-test », de M. Aikele et al., Sensors and Actuators A 92 (2001), Elsevier, pages 161 à 167, décrit un exemple d'un tel capteur résonant.

Dans un capteur inertiel résonant réalisé en technologie de surface, le résonateur vibre dans le plan du substrat et des électrodes d'excitation/détection sont obtenues par gravure plasma DRIE (gravure ionique réactive profonde) dans le substrat. L'usinage par gravure plasma DRIE puis la libération des éléments du capteur par une gravure d'une couche sacrificielle permettent d'optimiser le dessin (« design ») du capteur, et notamment de rapprocher le résonateur des charnières d'encastrement, ou d'ancrage, le reliant au reste du substrat.

Dans un capteur résonant à base de silicium, la détection de la vibration est réalisée par des moyens électrostatiques, des moyens piézorésistifs à résistances implantées, ou encore par des moyens piézoélectriques. Or, dans le cas d'une miniaturisation de ce type de capteur, par exemple dans le cadre de la réalisation de NEMS (nanosystème électromécanique), ces types de détection deviennent problématiques à cause de la très faible capacité de mesure dans le cas d'une détection électrostatique, de la difficulté de réalisation de jauges piézorésistives par implantation, ou de la problématique, dans le cas de jauges piézoélectriques, liée au dépôt d'un matériau piézoélectrique sur le résonateur, induisant une baisse du facteur de qualité.

Dans le cas des capteurs résonants à détection piézorésistive de type MEMS (microsystème électromécanique), des jauges se trouvant en surface d'un corps d'épreuve ne détectent qu'une contrainte normale provoquée par un mouvement de flexion hors-plan, c'est-à-dire normal à un plan du substrat à partir duquel est réalisé le capteur. Cela implique :
- une restriction importante des dessins possibles des capteurs, notamment dans le cas de capteurs bi-axes intégrés tels que des capteurs inertiels,
- une mauvaise adaptation à des capteurs réalisés en technologie de surface,
- une mauvaise adaptation à des capteurs « ultra-miniaturisés », tels que les NEMS, tant il est difficile de définir, avec une précision suffisante et sans ajout de contraintes mécaniques dues aux métallisations sur le corps d'épreuve, les zones de dopage et de connectique, pour la réalisation de ponts de jauges, sur des poutres de quelques dizaines de nanomètres de largeur.

Le document « High-mode resonant pizoresistive cantilever sensors for tens-femtogram resoluble mass sensing in air », de Dazhong Jin et al., 2006, J. Micromech. Microeng 16, pages 1017 à 1023, décrit un autre type de capteur dans lequel des jauges piézorésistives sont réalisées par dépôt d'une couche conductrice sur le résonateur. Mais un tel dépôt peut conduire à plusieurs inconvénients majeurs :
- l'ajout de contraintes au niveau de la poutre,
- une baisse du facteur de qualité du résonateur,
- l'apparition d'étapes critiques en plus des étapes de réalisation du résonateur proprement dites (dépôt d'une couche très mince de matériau conducteur avec un contrôle très strict de l'épaisseur, alignement, photolithographie et gravure des jauges sur la poutre),

- une détection se faisant hors plan, ce qui peut être un inconvénient en terme de dessin, surtout si l'on souhaite avoir une excitation électrostatique isolée du substrat, par exemple dans le cas d'un résonateur en silicium monocristallin,
- un faible coefficient piézorésistif (par rapport à une jauge de silicium) induisant une plus faible sensibilité.

Le document « Single-mask SOI fabrication process for linear and angular piezoresistive accelerometers with on-chip référence resistors », de J. Eklund et al., Sensors, 2005, IEEE, 30 octobre au 3 novembre 2005, pages 656 à 659, décrit un autre type de capteur dans lequel les jauges sont définies par gravure du silicium. Le silicium n'est plus dopé en surface et la détection (tension, compression) se fait dans le plan. Une telle configuration, appelée jauge suspendue, est bien adaptée à une technologie de surface et à la réalisation de capteurs de très petites dimensions (NEMS) par rapport aux jauges de type implantée ou déposée. Par contre, dans le cas d'un capteur de petites dimensions, présentant une petite masse sismique, la sensibilité du capteur est faible.

### EXPOSÉ DE L'INVENTION

Un but de la présente invention est de proposer un dispositif, ou microcomposant ou nanocomposant, de type capteur et/ou résonateur, réalisé avantageusement en technologie de surface, présentant une sensibilité et une précision élevée (rapport signal/bruit important, faible dérive en température), adaptable aux NEMS, c'est-à-dire aux capteurs de très petites dimensions (échelle nanométriques).

Pour résoudre ces problèmes, l'invention propose de réaliser un dispositif, ou microcomposant ou nanocomposant, à détection piézorésistive réalisé avantageusement en technologie de surface, comportant au moins :
- un corps d'épreuve où s'exerce un effort à mesurer,
- des moyens de détection d'une contrainte exercée par le corps d'épreuve sous l'action de l'effort, comportant au moins une jauge de contrainte piézorésistive suspendue,
- une cellule d'amplification de contrainte comprenant au moins deux bras rigides reliés mécaniquement l'un à l'autre par au moins un élément de liaison au niveau d'une première de leurs extrémités, une seconde extrémité d'un premier des deux bras rigides étant reliée mécaniquement au corps d'épreuve, une seconde extrémité d'un second des deux bras rigides étant ancrée à un substrat, ledit élément de liaison, ou les premières extrémités des deux bras rigides, étant relié mécaniquement à une première extrémité de la jauge de contrainte piézorésistive suspendue.

On entend par corps d'épreuve tout élément mécanique apte à se déformer sous l'effet d'une contrainte extérieure (accélération, pression, température, ...). Par exemple, dans le cas de capteurs inertiels, le corps d'épreuve peut correspondre à une ou plusieurs masses sismiques. Dans le cas d'un résonateur ou d'un capteur résonant, le corps d'épreuve peut correspondre à une ou plusieurs structures résonantes, appelées aussi résonateurs.

Lorsque le dispositif est de type résonateur ou capteur résonant, seule la fréquence du signal piézorésistif est détectée aux bornes de la jauge de contrainte piézorésistive suspendue, et non son amplitude. On profite ainsi à la fois de la grande sensibilité de la détection de variation fréquentielle, et de la simplicité de mise en oeuvre de la détection piézorésistive.

De plus, avec ce type de dispositif, on peut s'affranchir d'une métallisation du résonateur ou d'une implantation de la jauge, qui sont des techniques très contraignantes d'un point de vue technologique pouvant également dégrader les performances du dispositif.

L'invention peut être utilisée pour réaliser un oscillateur, un résonateur ou n'importe quel capteur résonant ou non (accéléromètre, gyromètre, capteur de pression, de masse ou biochimique...).

Lorsque le dispositif n'est pas de type résonateur ou capteur résonant, la cellule d'amplification peut également transmettre l'amplitude du signal piézorésistif détecté.

La structure en « demi-cric », ou en chevron, de la cellule d'amplification formée par les bras rigides permet de réaliser les connexions nécessaires à la mesure piézorésistive, préférentiellement en pont de jauge ou pont de Wheatstone, puisqu'une des extrémités de la jauge est ainsi ancrée au substrat.

La structure est adaptée à une fabrication de type « technologie de surface », applicable aux composants de type MEMS ou NEMS. Le corps d'épreuve, les moyens de détection, c'est-à-dire au moins la jauge de contrainte piézorésistive suspendue, et les éléments de la cellule d'amplification de contrainte peuvent être réalisés dans un même plan, c'est-à-dire avoir tous un plan commun. De plus, la jauge de contrainte et le corps d'épreuve peuvent être réalisés dans un même matériau piézorésistif.

La cellule d'amplification peut être avantageusement utilisée pour détecter la fréquence de vibration d'une poutre résonante, mais aussi de n'importe quelle structure vibrante formant un corps d'épreuve, offrant ainsi une grande liberté concernant le dessin du dispositif.

La jauge de contrainte piézorésistive suspendue peut comporter une seconde extrémité ancrée au substrat.

La jauge de contrainte piézorésistive suspendue peut comporter au moins une poutre suspendue à base d'un matériau piézorésistif.

Avantageusement, le dispositif peut comporter au moins deux jauges de contraintes piézorésistives suspendues, permettant ainsi de réaliser une mesure différentielle. De manière générale, la cellule d'amplification peut être utilisée de manière différentielle sur une structure résonante ou non, ou encore sur deux capteurs montés de manière différentielle.

Avantageusement, la seconde extrémité du premier bras rigide peut être reliée au corps d'épreuve au voisinage d'un encastrement du corps d'épreuve au substrat.

L'élément de liaison reliant mécaniquement les deux premières extrémités des deux bras rigides peut comporter au moins une liaison pivot.

L'élément de liaison reliant mécaniquement les premières extrémités des deux bras rigides peut comporter une liaison fixe avec la première extrémité de la jauge de contrainte piézorésistive suspendue.

Dans ce cas, chacune des premières extrémités des deux bras rigides peut être reliée mécaniquement à l'élément de liaison par au moins une liaison pivot.

Les deux bras rigides peuvent être symétriques par rapport à un axe principal de la jauge de contrainte piézorésistive suspendue.

Le corps d'épreuve peut comporter au moins une masse sismique mobile dans le plan du substrat, à laquelle peut être reliée la seconde extrémité du premier bras rigide.

La masse sismique peut être ancrée au substrat par l'intermédiaire d'une charnière.

La masse sismique peut être ancrée au substrat par l'intermédiaire d'un bras de guidage formé dans la masse sismique et encastré dans le substrat.

Dans une variante, le corps d'épreuve peut comporter au moins un élément résonant en flexion dans le plan du substrat. L'élément résonant peut être de type poutre ou diapason.

Le dispositif peut comporter en outre des moyens d'excitation, de l'élément résonant, de type capacitif, et/ou piézoélectrique, et/ou mécanique et/ou thermoélastique.

Deux extrémités de l'élément résonant peuvent être ancrées au substrat.

Le corps d'épreuve peut comporter en outre au moins une masse sismique mobile dans le plan du substrat, reliée à l'élément résonant.

La masse sismique peut être ancrée au substrat par l'intermédiaire d'une charnière.

L'élément résonant peut être relié à la masse sismique au voisinage d'un encastrement de la masse sismique au substrat.

Le corps d'épreuve peut comporter au moins deux masses sismiques mobiles dans le plan du substrat, deux bras de liaison reliés à chacune des deux masses sismiques par l'intermédiaire de bras de flexion destinés à transmettre les mouvements des masses sismiques aux bras de liaison, la seconde extrémité du premier bras rigide de la cellule d'amplification de contrainte pouvant être reliée à l'un des bras de liaison au voisinage d'un encastrement dudit bras de liaison au substrat.

Dans ce cas, les bras de liaison et les bras de flexion peuvent former par exemple un cadre sensiblement rectangulaire.

Le dispositif peut comporter en outre des moyens d'excitation des masses sismiques de type électrostatiques et/ou thermiques et/ou piézoélectriques.

Le dispositif peut comporter en outre au moins une seconde cellule d'amplification de contrainte pouvant comprendre au moins deux bras rigides reliés mécaniquement l'un à l'autre par au moins un élément de liaison au niveau d'une première de leurs extrémités, une seconde extrémité d'un premier des deux bras rigides pouvant être reliée mécaniquement au corps d'épreuve, une seconde extrémité d'un second des deux bras rigides pouvant être ancrée au substrat, ledit élément de liaison, ou les premières extrémités des deux bras rigides, pouvant être relié mécaniquement à une première extrémité d'une seconde jauge de contrainte piézorésistive suspendue destinée à travailler de manière différentielle en compression ou tension par rapport à la première jauge de contrainte piézorésistive suspendue travaillant respectivement en tension ou en compression.

Le dispositif peut comporter en outre au moins deux éléments résistifs et une source de polarisation pouvant former, avec les autres éléments du dispositif, un pont de Wheatstone.

Le dispositif peut comporter en outre des moyens de mesure de la variation de la résistance de la jauge de contrainte piézorésistive suspendue.

La ou les jauges de contrainte piézorésistives suspendues peuvent être disposées perpendiculairement à l'axe de l'effort induit (par exemple l'accélération ou la rotation) à mesurer.

Le dispositif peut être un capteur tel qu'un accéléromètre ou un gyromètre, résonant ou non, ou un résonateur.

La présente invention concerne également un procédé de réalisation d'un dispositif, ou microcomposant ou nanocomposant, tel que décrit précédemment, comportant au moins les étapes de :
a) dépôt d'une couche à base d'au moins un matériau conducteur (par exemple une tri-couche à base de titane, de nickel et d'or) sur un substrat comportant une première couche à base d'au moins un semi-conducteur sur laquelle est disposée une couche sacrificielle et une seconde couche à base de semi-conducteur,
b) photolithographie et gravure de contacts électriques du dispositif dans la couche à base du matériau conducteur,
c) photolithographie et gravure de la structure mécanique du dispositif dans la seconde couche à base de semi-conducteur, avec arrêt sur la couche sacrificielle,
d) libération des éléments du dispositif par gravure de la couche sacrificielle au niveau de ces éléments.

Le substrat utilisé peut par exemple être un substrat SOI (silicium sur isolant).

Le procédé peut comporter en outre, entre les étapes b) et c), les étapes de :
- dépôt, par exemple par photolithographie, d'une couche de protection sur la structure mécanique du dispositif, sauf sur la jauge de contrainte piézorésistive suspendue,
- amincissement, par exemple par gravure avec arrêt au bout d'une durée déterminée, de la jauge de contrainte piézorésistive suspendue,
- retrait de la couche de protection.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
- la figure 1 représente un résonateur à excitation électrostatique et détection piézorésistive suspendue comportant une cellule d'amplification de contrainte, objet de la présente invention,
- la figure 2 représente un accéléromètre résonnant à détection par jauge de contrainte piézorésistive suspendue comportant une cellule d'amplification de contrainte, objet de la présente invention,
- la figure 3 représente un gyromètre résonnant à détection par jauge de contrainte piézorésistive suspendue comportant une cellule d'amplification de contrainte, objet de la présente invention,
- la figure 4 représente un accéléromètre non résonnant à détection par jauge de contrainte piézorésistive suspendue comportant une cellule d'amplification de contrainte, objet de la présente invention,
- la figure 5 représente une cellule d'amplification de contrainte comportant une piste électrique réalisée sur un des bras rigides de la cellule,
- la figure 6 représente un accéléromètre non résonant à détection par jauge de contrainte piézorésistive suspendue comportant une cellule d'amplification de contrainte, objet de la présente invention,
- la figure 7 représente un résonateur à détection par jauges de contrainte piézorésistives suspendues montées en mode différentiel et à pont de Wheatstone, comportant deux cellules d'amplification de contrainte, objet de la présente invention,
- la figure 8 représente un accéléromètre non résonant à détection par jauges de contraintes piézorésistives suspendues montées en mode différentiel et à pont de Wheatstone, et comportant deux cellules d'amplification de contrainte, objet de la présente invention,
- la figure 9A représente un accéléromètre à détection par jauges de contrainte piézorésistives suspendues montée en mode différentiel et à pont de Wheatstone, comportant deux cellules d'amplification de contrainte, objet de la présente invention,
- la figure 9B représente un schéma électrique équivalent du pont de Wheatstone formé par l'accéléromètre représenté sur la figure 9A,
- les figures 10A à 10C et 10A' à 10C' représentent les étapes d'un premier exemple de procédé de réalisation de l'invention, respectivement dans des vues en coupe et de dessus,
- les figures 11A à 11F et 11A' à 11F' représentent les étapes d'un second exemple de procédé de réalisation de l'invention, respectivement dans des vues en coupe et de dessus.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE RÉALISATION PARTICULIERS

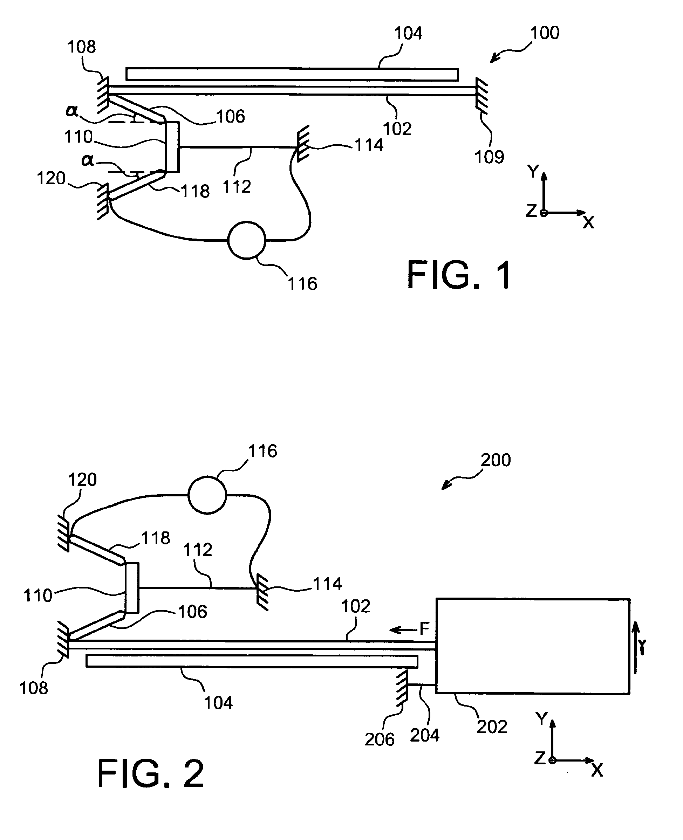

On se réfère tout d'abord à la figure 1 qui représente un microcomposant 100 selon un premier mode de réalisation.

Dans ce premier mode de réalisation, le microcomposant 100 est un résonateur, de type MEMS ou NEMS. Le résonateur 100 comprend un élément résonant 102, ou structure résonante, par exemple de type poutre, en flexion dans un plan (x,y) correspondant au plan d'un substrat (non représenté) à partir duquel est réalisé le résonateur 100. Dans une variante, l'élément résonant 102 peut être de type diapason, c'est-à-dire formé par au moins deux poutres reliées l'une à l'autre au niveau d'une de leurs extrémités. L'élément résonant 102 est destiné à être excité par des moyens d'excitation 104, par exemple une électrode d'excitation. Ces moyens d'excitation 104 peuvent être de type capacitif, et/ou piézoélectrique, et/ou magnétique et/ou thermoélastique.

L'élément résonant 102 est solidaire, par l'intermédiaire d'une liaison pivot, d'une extrémité, appelée seconde extrémité, d'un premier bras rigide 106, près d'un premier encastrement 108 d'une première extrémité de l'élément résonant 102 au substrat sur lequel est réalisé le résonateur 100, limitant ainsi la contribution du premier bras rigide 106 sur la fréquence propre de l'élément résonant 102. La distance entre le premier encastrement 108 de l'élément résonant 102 et la liaison pivot entre l'élément résonant 102 et le premier bras rigide 106 est par exemple égale à environ un dixième de la longueur de l'élément résonant 102. Une seconde extrémité de l'élément résonant 102 est reliée à un second encastrement 109 au substrat. Une première extrémité du premier bras rigide 106 est liée par une liaison pivot à un élément de liaison 110, comportant une liaison rigide ou fixe avec une jauge de contrainte piézorésistive suspendue 112 assurant ainsi les conditions limites encastrées-encastrées de la jauge 112, en même temps que la transmission optimale de la contrainte, provenant de l'élément résonant 102 puis amplifiée par le premier bras rigide 106, à la jauge 112. La jauge 112 est par exemple réalisée par gravure d'une poutre suspendue dans un matériau piézorésistif, préférentiellement du silicium dopé, afin de diminuer la valeur de la résistance de la jauge 112. L'autre extrémité de la jauge piézorésistive 112 est liée au substrat par l'intermédiaire d'un troisième encastrement 114 au substrat relié également à des moyens de mesure 116 de la variation de la résistance ΔR de la jauge 112.

Le résonateur 100 comporte en outre un second bras rigide 118 dont une première extrémité est reliée, par l'intermédiaire d'une liaison pivot, à l'élément de liaison 110, et une seconde extrémité est reliée, par l'intermédiaire d'une autre liaison pivot, à un quatrième encastrement 120 au substrat. Chacun des quatre encastrements au substrat 108, 109, 114 et 120 forme une liaison fixe avec le substrat sur lequel est réalisé le résonateur 100.

Les deux bras rigides 106 et 118 sont placés de façon à constituer la moitié d'un « cric » ou un chevron. Les deux bras rigides 106 et 118, et l'élément de liaison 110 forment une cellule d'amplification de contrainte du résonateur 100. L'ensemble des éléments du résonateur 100, hormis les encastrements 108, 109, 114 et 120, sont par exemple libérés du substrat par gravure d'une couche sacrificielle disposée sous la couche dans laquelle sont réalisés les éléments du résonateur 100.

Lorsque l'élément résonant 102 est soumis à une force de flexion parallèle et dans le sens opposé au vecteur y (représenté sur la figure 1), l'élément résonant 102 fléchit dans le sens de cette force et transmet alors une contrainte dans le sens opposé au vecteur y au niveau de la première extrémité du premier bras rigide 106. Cette contrainte appliquée sur le premier bras rigide 106 se traduit par une contrainte de déplacement dans le sens opposé au vecteur y et une contrainte en rotation du premier bras rigide 106 dans le sens horaire inverse autour des liaisons pivots reliant ses extrémités à l'élément de liaison 110 et à l'élément résonant 102, réduisant ainsi la valeur de l'angle α, angle formé entre une parallèle au vecteur x et l'axe du bras rigide 106. L'élément de liaison 110 subit donc une contrainte dans le sens du vecteur x se traduisant par un effort de compression dans l'axe de la jauge 112.

Inversement, lorsque l'élément résonant 102 est soumis à une force de flexion parallèle et dans le sens du vecteur y, l'élément résonant 102 fléchit dans le sens de cette force, et transmet une contrainte dans le sens du vecteur y au niveau de la première extrémité du bras rigide 106. Cette contrainte appliquée sur le bras rigide 106 se traduit par une contrainte de déplacement parallèle et dans le sens opposé au vecteur x, et une contrainte de rotation du bras rigide 106 dans le sens horaire autour des liaisons pivots entre ses extrémités reliées à l'élément de liaison 110 et à l'élément résonant 102, augmentant la valeur de l'angle α. L'élément de liaison 110 subit donc une contrainte dans le sens opposé au vecteur x se traduisant par un effort d'extension dans l'axe de la jauge 112.

Le second bras rigide 118 accompagne, dans un mouvement complémentaire à celui du premier bras rigide 106, les déplacements axiaux de l'élément de liaison 110.

Ainsi, le mouvement alternatif de flexion parallèlement au vecteur y de l'élément résonant 102 entraîne une variation alternative de la résistance de la jauge 112 due aux contraintes de déplacement parallèlement au vecteur x subies par la jauge 112. Les bras rigides 106 et 118 permettent donc d'amplifier les contraintes en flexion de l'élément résonant 102 puis de les appliquer sur l'élément de liaison 110 et sur la jauge 112. Les deux bras rigides 106, 118 et l'élément de liaison 110 forment donc une cellule d'amplification de contrainte.

Le rapport d'amplification des déplacements de l'élément résonant 102, suivant l'axe du vecteur y, et de l'élément de liaison 110, suivant l'axe du vecteur x, étant d'environ *1*/*tan(*α*)*, on choisit de préférence, pour profiter au maximum de l'effet d'amplification, une valeur de α inférieure à environ 45°.

De préférence, le ou les bras rigide 106, 108 comportent un corps relativement large, avec des extrémités fines pouvant fléchir par rapport au corps, et ainsi assurer au moins en partie les liaisons pivots. Par exemple, dans le cas d'un dispositif de type MEMS, pour un corps de bras rigide dont la largeur est égale à environ 10 µm, les extrémités des bras rigides peuvent avoir une largeur égale à environ 2 µm.

Enfin, les variations de la valeur de la résistance de la jauge 112 étant directement proportionnelles aux contraintes longitudinales qu'elle subit, il convient, pour maximiser la sensibilité de détection de la jauge 112, de réduire autant que possible la section de la jauge 112, dans la limite de sa contrainte de flambage en compression. Typiquement, la valeur de cette section peut être inférieure à la valeur de la section des bras rigides 106, 118, au niveau de leurs parties centrales (corps). La section de la jauge 112 peut même être amincie dans l'épaisseur (dimension selon la normale au plan (x,y)), et être d'une épaisseur inférieure à celles des autres éléments du résonateur 100.

On se réfère maintenant à la figure 2 qui représente un microcomposant 200, ici un capteur résonant, selon un second mode de réalisation.

Le capteur résonant 200, ici de type accéléromètre, comporte un élément résonant 102 dont l'une de ses extrémités est ancrée au substrat sur lequel est réalisé le capteur 200, par l'intermédiaire d'un premier encastrement 108, et rattachée au niveau de son autre extrémité à une masse sismique 202, au voisinage d'une charnière 204 reliant la masse sismique 202 à un second encastrement 206 au substrat. Le capteur 200 comporte également des moyens d'excitation 104, par exemple électrostatiques, ici une électrode, de l'élément résonant 102, une cellule d'amplification formée par deux bras rigides 106, 118 et un élément de liaison 110 relié à une première extrémité d'une jauge de contrainte piézorésistive suspendue 112 qui est également reliée, au niveau d'une seconde extrémité, à un troisième encastrement 114. La cellule d'amplification et la jauge 112 sont disposées au voisinage du premier encastrement 108 de l'élément résonant 102. Enfin, le capteur 200 comporte des moyens de mesure 116 de variations de la résistance ΔR de la jauge 112.

Dans le cas d'une accélération γ (représentée sur la figure 2), dans le sens du vecteur y, la masse sismique 202 est soumise à une force suivant l'axe y qui tend à faire tourner la masse en rotation au niveau de la charnière 204, se traduisant par une contrainte F (également représentée sur la figure 2) sur l'élément résonant 102 dans le sens opposé au vecteur x. Cette contrainte F induit une variation de la fréquence de résonance de l'élément résonant 102. La fréquence propre de l'élément résonant 102 est alors modifiée par la contrainte s'exerçant sur l'élément résonant 102. La détection de la vibration est réalisée par la jauge 112, la contrainte sur la jauge 112 étant amplifiée par la cellule d'amplification.

Dans les exemples décrits précédemment, la cellule d'amplification est utilisée avantageusement pour amplifier la contrainte, issue de la vibration de l'élément résonant, sur la jauge 112. Dans une variante de réalisation, cette cellule d'amplification peut être utilisée pour mesurer la fréquence de résonance de n'importe quel autre élément résonant, en choisissant judicieusement les emplacements de l'élément résonant au niveau desquels la cellule d'amplification est reliée, avantageusement près des encastrements de l'élément résonant.

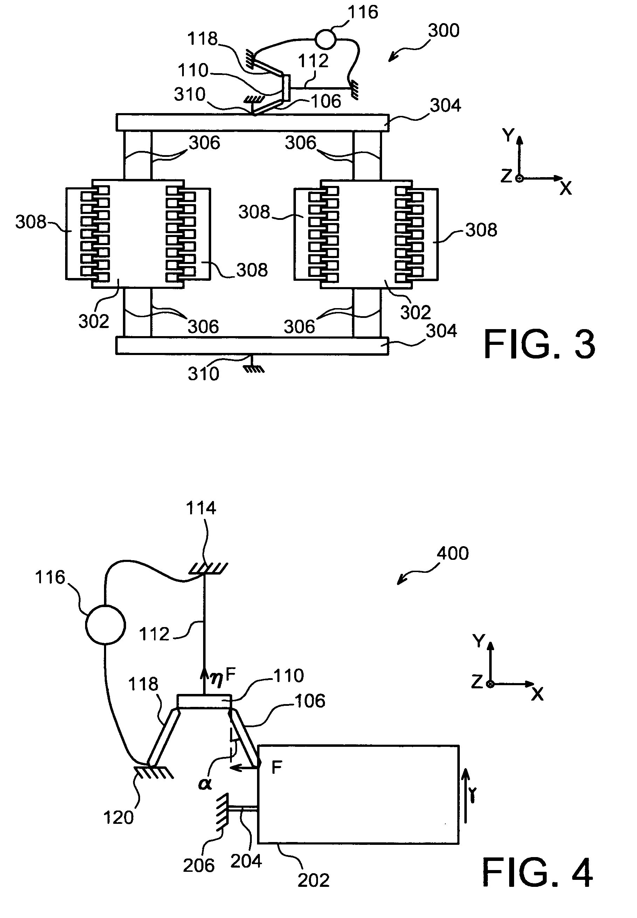

La figure 3 représente un microcomposant 300, ici un gyromètre résonant, selon un troisième mode de réalisation. Le gyromètre 300 comporte un substrat, non représenté, et deux masses sismiques 302 mobiles dans le plan (x,y) du substrat et aptes à entrer en vibration. Deux bras de liaison 304, ici parallèles l'un par rapport à l'autre, sont reliés aux masses sismiques 302 par l'intermédiaire de bras de flexion 306 dont la flexibilité est suffisante pour permettre des mouvements relatifs des deux masses sismiques 302 par rapport aux bras de liaison 304, tout en étant suffisamment rigides pour transmettre les mouvements de ces deux masses sismiques 302 aux bras de liaison 304. Les bras de liaison 304 et les bras de flexion 306 forment ici un cadre rectangulaire.

Le gyromètre 300 comporte également des électrodes d'excitation 308, par exemple sous forme de peignes dont les doigts s'imbriquent avec ceux des masses sismiques 302, aptes à mettre les masses sismiques 302 en vibration dans le plan (x,y), et notamment dans une direction parallèle au vecteur x. D'autres moyens peuvent être envisagés, par exemple des moyens électromagnétiques.

Les masses sismiques 302 sont excitées, de préférence à leur fréquence de résonance ou au voisinage de cette fréquence de résonance, par le biais de forces électrostatiques appliquées par l'intermédiaire des électrodes 308. Les masses sismiques 302, les bras de liaison 304 et les bras de flexion 306 forment un résonateur d'excitation. Le fonctionnement à la résonance permet d'obtenir une forte amplitude de déplacement des masses sismiques 302 (du fait du facteur de qualité du résonateur), augmentant d'autant la sensibilité du gyromètre 300. Avantageusement, la vibration de chacune des masses sismiques 302 peut être en opposition de phase avec la vibration de l'autre masse sismique 302, c'est-à-dire que leurs mouvements sont en direction opposées à chaque instant.

Lorsque le gyromètre 300 subit un déplacement angulaire autour d'un axe z perpendiculaire au substrat sur lequel est réalisé le gyromètre 300, une force de Coriolis est générée sur chacune des masses sismiques 302, parallèlement au vecteur y, issue de la composition de la vibration forcée par les électrodes 308 avec une vitesse angulaire Ω. Les forces de Coriolis sont transmises aux bras de liaison 304 par l'intermédiaire des bras de flexion 306. Chacun des bras de liaison 304 est relié au substrat par l'intermédiaire d'une charnière 310. L'un des bras de liaison 304 est relié à la cellule d'amplification formée par les bras rigides 106, 118 et l'élément de liaison 110 relié à la jauge 112, à proximité d'une charnière 310. La variation de résistance mesurée par les moyens de mesure 116 est proportionnelle à la vitesse angulaire Ω relative à la rotation des masses sismiques 302 au niveau des charnières 310.

La cellule d'amplification peut également être utilisée pour réaliser une amplification de mouvements non alternatifs (capteur non résonant), statiques ou lentement variables, avec une grande sensibilité, puisqu'en étant correctement dimensionnée, elle augmente de façon sensible l'amplitude du signal piézorésistif obtenu. De préférence, dans ce type de capteur, on réalise un contrôle en stabilité de la température de la jauge de contrainte piézorésistive suspendue afin que des variations de température n'influent pas sur les mesures de résistance réalisées.

On se réfère à la figure 4 qui représente un capteur non résonant, ici un accéléromètre 400. Cet accéléromètre 400 comporte une charnière 204 reliant une masse sismique 202 à un second encastrement 206 au substrat. L'accéléromètre 400 comporte également une cellule d'amplification formée par les bras rigides 106, 118 et l'élément de liaison 110 relié à la jauge de contrainte piézorésistive suspendue 112. Le bras rigide 118 de la cellule d'amplification est ancré au substrat par l'intermédiaire d'un encastrement 120, et le bras rigide 106 est rattaché à la masse sismique 202 au voisinage de la charnière 204. Sous l'effet d'une accélération γ, la masse sismique 202 applique une contrainte F sur le bras 106 de la cellule amplification dans le sens opposé à l'axe x, se traduisant par une contrainte ηF, avec η ≈ 1/tan(α), sur la jauge 112 selon l'axe y. La variation de résistance de la jauge de contrainte piézorésistive suspendue 112, amplifiée par la cellule d'amplification, est alors directement proportionnelle à l'accélération. Cette variation est alors mesurée par les moyens de mesure 116.

Quelque soit le type de capteur et/ou résonateur, il est possible de réaliser les mesures de variations de la résistance de la jauge de contrainte piézoélectrique suspendue en reliant les moyens de mesure directement à l'une des extrémités de la jauge de contrainte piézorésistive suspendue qui est reliée à un encastrement et à l'un des bras rigides de la cellule d'amplification qui est à base d'au moins un matériau semi-conducteur ou conducteur. Le fait que la mesure de résistance soit réalisée à travers l'un des bras rigides et l'élément de liaison induit une résistance série supplémentaire impactant légèrement la mesure.

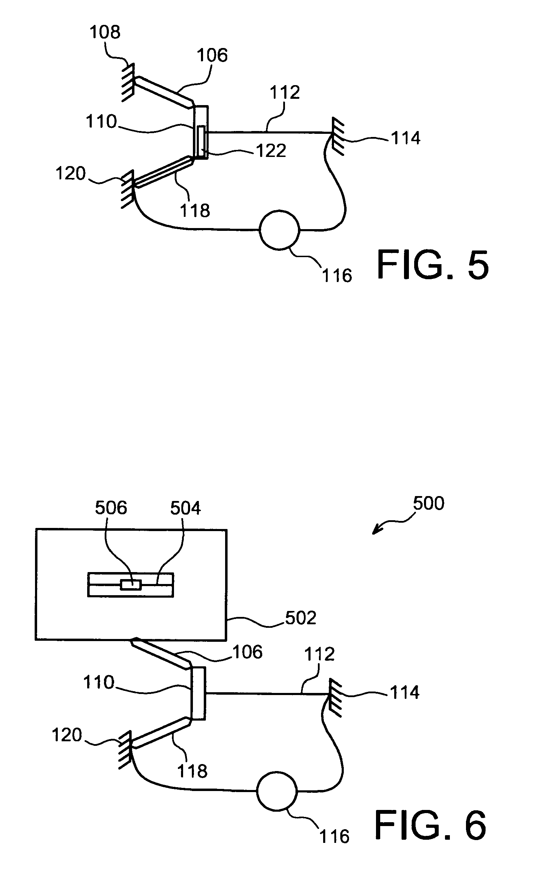

Dans une variante, comme représenté sur la figure 5, il est possible qu'une piste électrique 122 soit disposée sur l'un des bras rigides 118 de la cellule d'amplification et au moins en partie sur l'élément de liaison 110, la mesure des variations de résistance de la jauge 112 étant réalisée par l'intermédiaire de cette piste électrique 122. Cette variante est envisageable si le bras rigide 118 et l'élément de liaison 110 sont suffisamment larges pour pouvoir comporter une telle piste électrique 122, et que cette piste électrique 122 n'induise pas de contraintes importantes sur la structure de la cellule d'amplification.

La figure 6 représente un microcomposant 500 de type accéléromètre non résonant, selon un autre mode de réalisation. Cet accéléromètre comporte une cellule d'amplification comprenant les bras rigides 106, 118 et l'élément de liaison 110. L'accéléromètre 500 comporte également une masse sismique 502 dans laquelle est formé un bras de guidage 504 relié à un encastrement 506 au substrat sur lequel est réalisé l'accéléromètre 500. Le fonctionnement de cet accéléromètre est sensiblement similaire à celui décrit en liaison avec la figure 4.

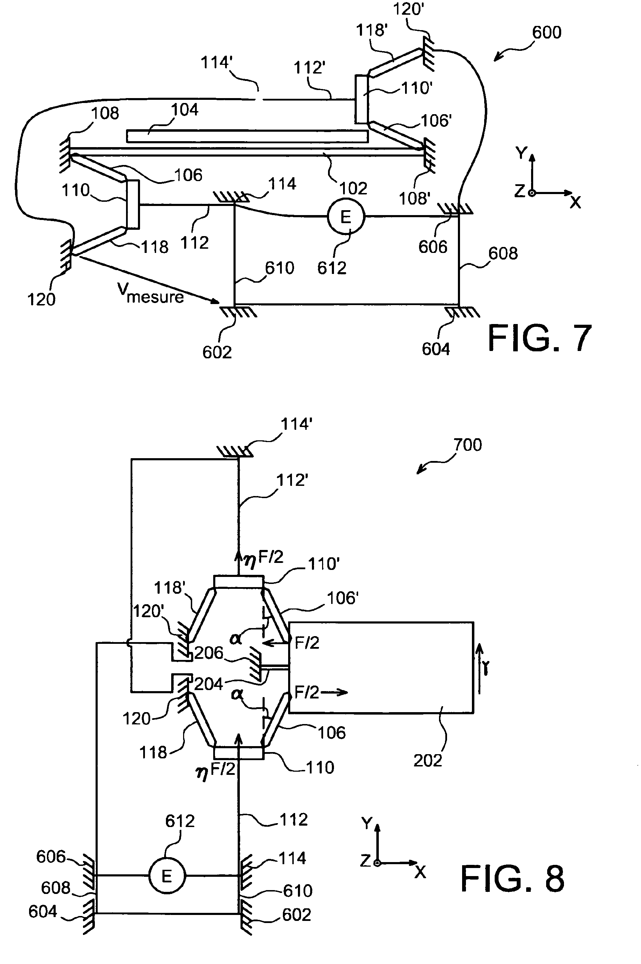

La figure 7 représente un microcomposant 600 de type résonateur à détection piézorésistive montée en mode différentiel et pont de Wheatstone.

Le résonateur 600 comporte un élément résonant 102 de type poutre, des moyens d'excitation 104, ici une électrode, de l'élément résonant 102. Comme dans le dispositif résonant 100, le résonateur 600 comporte une première cellule d'amplification formée par deux bras rigides 106, 118 reliés à un élément de liaison 110 lui-même relié à une jauge de contrainte piézorésistive suspendue 112. Cette cellule d'amplification est reliée à une première extrémité de l'élément résonant 102. L'autre extrémité de l'élément résonant 102 est reliée à une seconde cellule d'amplification formée par un troisième bras rigide 106' disposé entre ladite autre extrémité de l'élément résonant 102, près d'un encastrement 108' au substrat de cette extrémité, et un élément de liaison 110' relié à une seconde jauge de contrainte piézorésistive suspendue 112'. Un quatrième bras rigide 118' est disposé entre un encastrement 120' au substrat et l'élément de liaison 110'.

Le résonateur 600 comporte également d'autres éléments utilisés pour former un pont de Wheatstone, tels que des encastrements au substrat 602, 604 et 606, des éléments résistifs 608, 610, et une source de polarisation 612. Une tension est mesurée entre l'encastrement 120 du second bras rigide 118 et l'encastrement 602 de l'un des éléments résistifs 610. On obtient alors une mesure de résistance R+ΔR (avec ΔR variation de la résistance de la première jauge de contrainte piézorésistive suspendue 112) au niveau de la première jauge 112, et une mesure de résistance R-ΔR (avec -ΔR variation de la résistance de la seconde jauge de contrainte piézorésistive suspendue 112') au niveau de la seconde jauge 112'.

On a ainsi un fonctionnement en mode différentiel d'une structure résonante, les deux cellules d'amplification étant complémentaires pour réaliser l'amplification de mouvements de l'élément résonant 102.

La figure 8 représente un microcomposant 700 de type accéléromètre non résonant à détection par jauges de contraintes piézorésistives suspendues montées en mode différentiel et à pont de Wheatstone.

L'accéléromètre 700 comporte les mêmes éléments que le résonateur 600, excepté pour l'élément résonant 102 et les moyens d'excitation 104 qui sont remplacés par une masse sismique 202 qui est ancrée au substrat par un encastrement 206 via une charnière 204. Les secondes extrémités des bras rigides 106, 106' sont reliées directement à la masse sismique 202.

Lorsque la masse sismique 202 est soumise à une accélération γ dans le sens de l'axe γ, la masse sismique 202 exerce une contrainte d'intensité F/2 en tension sur la seconde extrémité du bras rigide 106 qui est reliée à la masse sismique 202, dans le sens de l'axe x. La masse sismique exerce également une autre contrainte d'intensité F/2 en compression sur la seconde extrémité du bras rigide 106' qui est reliée à la masse sismique 202, dans le sens opposé à l'axe x. Ces contraintes sont répercutées au niveau des éléments de liaison 110 et 110'. Ainsi, les jauges 112 et 112' subissent chacune une contrainte dans le sens de l'axe y dont l'intensité est égale à ηF/2, avec η ≈ 1/tan(α), α étant l'angle formé entre l'axe des bras rigides 106, 106' et un droite parallèle à l'axe y.

Une tension est mesurée entre l'encastrement 120 du second bras rigide 118 et l'encastrement 602 de l'un des éléments résistifs 610. On obtient alors une mesure de résistance R+ΔR (avec ΔR variation de la résistance de la première jauge de contrainte piézorésistive suspendue 112) au niveau de la première jauge 112, et une mesure de résistance R-ΔR (avec -ΔR variation de la résistance de la seconde jauge de contrainte piézorésistive suspendue 112') au niveau de la seconde jauge 112'.

On a ainsi un fonctionnement en mode différentiel d'une structure résonante, les deux cellules d'amplification étant complémentaires pour réaliser l'amplification de mouvements de la masse sismique 202. L'accélération γ peut être enfin calculée de manière classique à partir des paramètres des éléments formant le pont de Wheatstone.

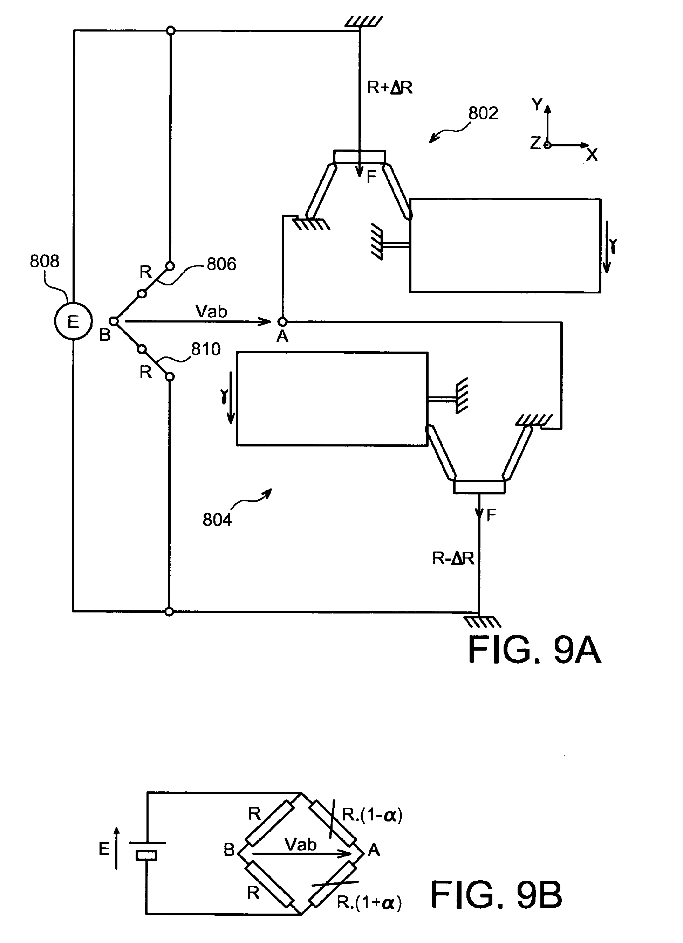

Il est également possible de réaliser un microcomposant comportant plusieurs capteurs résonants ou non montés de manière différentielle. La figure 9A représente un exemple d'un tel microcomposant 800 de type accéléromètre non résonant, monté de manière différentielle et en pont de Wheatstone.

L'accéléromètre 800 comporte un premier et un second capteurs non résonants 802, 804 de type accéléromètre, par exemple similaires à l'accéléromètre 400 représenté sur la figure 4. Chacun des capteurs 802, 804 comporte une masse sismique, une cellule d'amplification de contrainte et une jauge de contrainte piézorésistive suspendue. L'un des bras rigides de la cellule d'amplification du premier capteur 802 comporte une première extrémité reliée mécaniquement à un élément de liaison, lui-même relié à une jauge de contrainte, et une seconde extrémité reliée électriquement à une seconde extrémité d'un des bras rigides de la cellule d'amplification du second capteur. L'autre bras rigide de la cellule d'amplification du premier capteur 802 comporte une première extrémité reliée à l'élément de liaison et une seconde extrémité reliée la masse sismique. L'une des extrémités de la jauge de contrainte est reliée électriquement à un premier élément 806 résistif R et à une borne d'une source de polarisation 808. Un second élément 810 résistif R est relié électriquement au premier élément 806 résistif R et à un encastrement de la jauge de contrainte piézorésistive suspendue du second capteur 804.

L'un des bras rigides de la cellule d'amplification du second capteur 804 comporte une première extrémité reliée électriquement à un autre élément de liaison, lui-même relié à une extrémité d'une jauge de contrainte du second capteur 804, et une seconde extrémité reliée électriquement à la seconde extrémité de l'un des bras rigides de la cellule d'amplification de contrainte du premier capteur 802. L'autre bras rigide de la cellule d'amplification du second capteur 804 comporte une première extrémité reliée à l'élément de liaison et une seconde extrémité reliée la masse sismique. L'une des extrémités de la jauge de contrainte du second capteur 804 est reliée électriquement au second élément résistif 810 et à l'autre borne de la source de polarisation 808.

Ainsi, les éléments de l'accéléromètre 800 forment un montage en pont de Wheastone, une tension étant mesurée entre un premier point B où sont reliés les deux éléments résistifs 806, 810, et un second point A relié électriquement aux secondes extrémités de deux bras rigides des cellule d'amplification de contrainte des deux capteurs 802 et 804. Cette mesure permet d'obtenir une mesure de résistance R+ΔR au niveau de la jauge de contrainte piézorésistive suspendue du premier capteur 802, et une mesure de résistance R-ΔR au niveau de la jauge de contrainte piézorésistive suspendue du second capteur 804. On déduit alors la valeur de ΔR représentative d'une accélération γ subie par les masses sismiques des capteurs 802 et 804. La figure 9B représente schématiquement le pont de Wheatstone obtenu par le montage de la figure 9A.

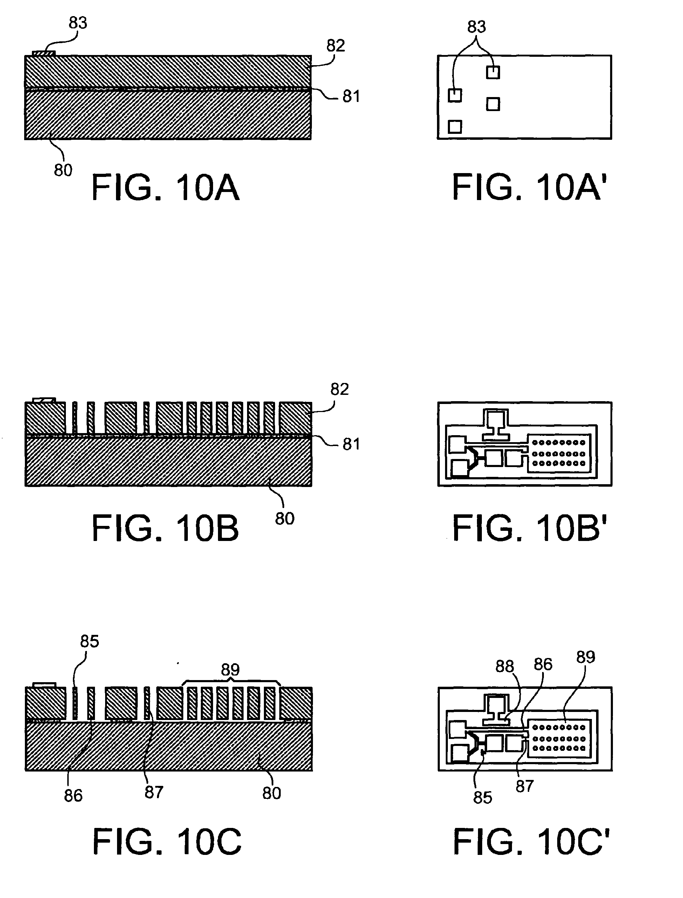

On se réfère maintenant aux figures 10A à 10C (vue en coupe) et 10A' à 10C' (vue de dessus), représentant les étapes d'un premier exemple de réalisation d'un des microcomposants décrits précédemment.

On dépose par exemple une tri-couche (3 couches) à base de titane, de nickel et d'or, sur un substrat SOI comprenant un substrat de base (« bulk ») 80 à base de silicium, une couche sacrificielle à base de SiO₂ 81 (par exemple de 0,4 µm d'épaisseur) et une couche de silicium 82 (par exemple de 4 µm d'épaisseur). On délimite des contacts 83 par photolithographie et gravure (figures 10A et 10A').

On délimite ensuite la structure mécanique du dispositif par photolithographie et gravure DRIE, dans la couche de silicium 82 avec arrêt sur la couche sacrificielle 81 (figures 10B et 10B').

On libère enfin les composants du dispositif par exposition à l'acide fluorhydrique (humide ou vapeur) de la couche sacrificielle 81 avec arrêt au bout d'une durée déterminée.

Le dispositif représenté sur les figures 10C et 10C' comporte une jauge de contrainte piézorésistive suspendue et une cellule d'amplification 85, un élément résonant 86, une charnière 87, une électrode d'excitation 88 de l'élément résonant, et une masse sismique 89.

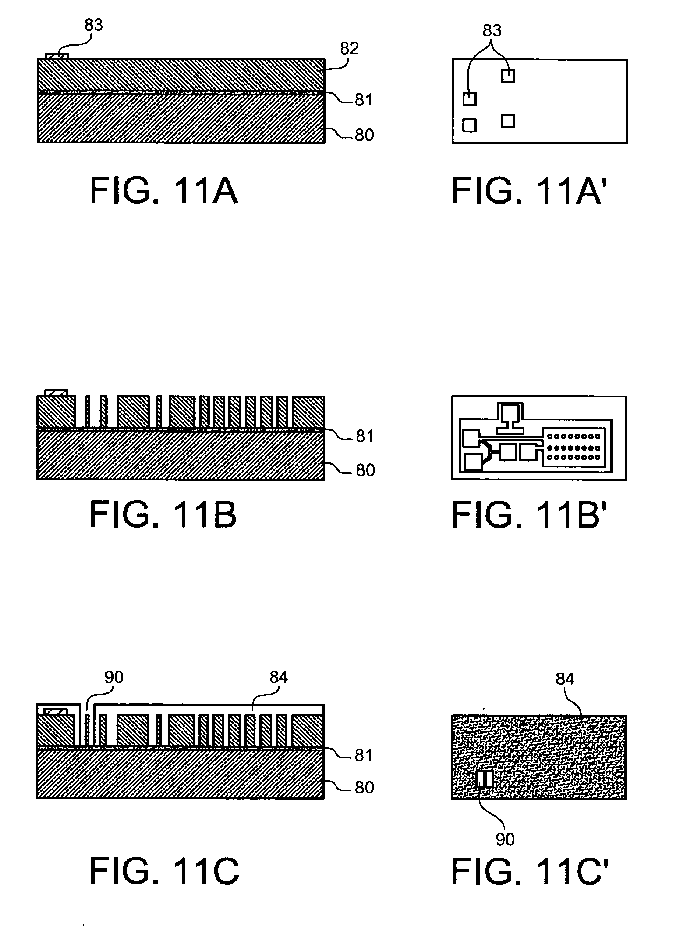

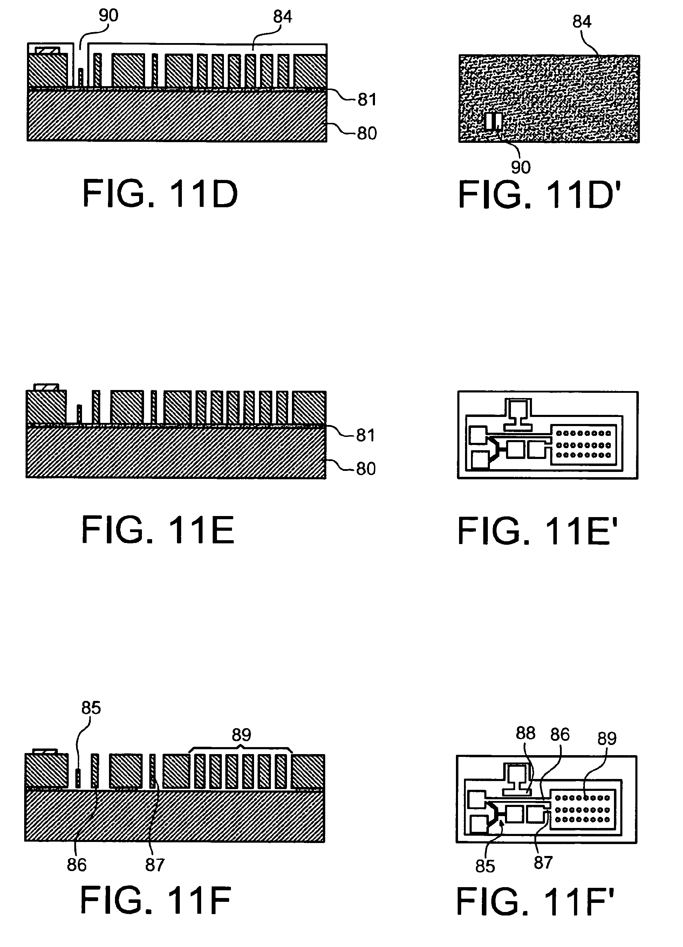

Les figures 11A à 11F (vue en coupe) et 11A' à 11F' (vue de dessus) représentent les étapes d'un second exemple de réalisation d'un des microcomposants décrits précédemment.

On dépose une tri-couche à base de titane, de nickel et d'or sur un substrat par exemple de type SOI par exemple similaire à celui décrit précédemment. On délimite les contacts par photolithographie et gravure (figures 11A et 11A').

On délimite la structure mécanique du dispositif par photolithographie et gravure DRIE de la structure mécanique, dans la couche de silicium 82 avec arrêt sur la couche sacrificielle 81 (figures 11B et 11B').

On dépose une couche de protection 84 de la structure mécanique par photolithographie, sauf dans une zone 90 où se situe la jauge de contrainte piézorésistive du dispositif (figures 11C et 11C').

On amincit alors la jauge de contrainte piézorésistive 90 par gravure DRIE avec arrêt au bout d'une durée déterminée (figures 11D et 11D').

On réalise un retrait (« stripping ») de la couche de protection 84 (figures 11E et 11E').

On libère les composants du dispositif de l'invention par exposition à l'acide fluorhydrique (humide ou vapeur) de la couche sacrificielle 81 avec arrêt au bout d'une durée déterminée.

Les deux exemples de réalisation décrits ci-dessus reposent sur l'utilisation de substrats SOI à base de silicium monocristallin. Toutefois, cet exemple n'est pas limitatif et les microcomposants ou nanocomposants décrits précédemment peuvent être réalisés à partir de substrat à base de silicium polycristallin, de SiGe monocristallin, de SiGe polycristallin, etc....

## Revendications

1. Dispositif (100, 200, 300, 400, 500, 600, 700, 800) à détection piézorésistive, comportant au moins :
- un corps d'épreuve (102, 202, 302, 502) où s'exerce un effort à mesurer,
- des moyens de détection d'une contrainte exercée par le corps d'épreuve (102, 202, 302, 502) sous l'action de l'effort, comportant au moins une jauge de contrainte piézorésistive suspendue (112),
- une cellule d'amplification de contrainte comprenant au moins deux bras rigides (106, 118) reliés mécaniquement l'un à l'autre par au moins un élément de liaison (110) au niveau d'une première de leurs extrémités, une seconde extrémité d'un premier (106) des deux bras rigides étant reliée mécaniquement au corps d'épreuve (102, 202, 302, 502), une seconde extrémité d'un second (118) des deux bras rigides étant ancrée à un substrat, l'élément de liaison (110) étant relié mécaniquement à une première extrémité de la jauge de contrainte piézorésistive suspendue (112).

2. Dispositif (100, 200, 300, 400, 500, 600, 700, 800) selon la revendication 1, la jauge de contrainte piézorésistive suspendue (112) comportant une seconde extrémité ancrée au substrat.

3. Dispositif (100, 200, 300, 400, 500, 600, 700, 800) selon l'une des revendications précédentes, la jauge de contrainte piézorésistive suspendue (112) comportant au moins une poutre suspendue à base d'un matériau piézorésistif.

4. Dispositif (100, 200, 300, 400, 600, 700, 800) selon l'une des revendications précédentes, la seconde extrémité du premier bras rigide (106) étant reliée au corps d'épreuve (102, 202, 302) au voisinage d'un encastrement (108, 206) du corps d'épreuve (102, 202, 302) au substrat.

5. Dispositif (100, 200, 300, 400, 500, 600, 700, 800) selon l'une des revendications précédentes, l'élément de liaison (110) reliant mécaniquement les deux premières extrémités des deux bras rigides (106, 118) comportant au moins une liaison pivot.

6. Dispositif (100, 200, 300, 400, 500, 600, 700, 800) selon l'une des revendications 1 à 4, l'élément de liaison (110) reliant mécaniquement les premières extrémités des deux bras rigides (106, 118) comportant une liaison fixe avec la première extrémité de la jauge de contrainte piézorésistive suspendue (112).

7. Dispositif (100, 200, 300, 400, 500, 600, 700, 800) selon la revendication 6, chacune des premières extrémités des deux bras rigides (106, 118) étant reliée mécaniquement à l'élément de liaison (110) par au moins une liaison pivot.

8. Dispositif (100, 200, 300, 400, 500, 600, 700, 800) selon l'une des revendications précédentes, les deux bras rigides (106, 118) étant symétriques par rapport à un axe principal de la jauge de contrainte piézorésistive suspendue (112).

9. Dispositif (200, 300, 400, 500, 700, 800) selon l'une des revendications précédentes, le corps d'épreuve comportant au moins une masse sismique (202, 302, 502) mobile dans le plan du substrat, à laquelle est reliée la seconde extrémité du premier bras rigide (106).

10. Dispositif (200, 400, 700, 800) selon la revendication 9, la masse sismique (202) étant ancrée au substrat par l'intermédiaire d'une charnière (204).

11. Dispositif (500) selon l'une des revendications 9 ou 10, la masse sismique (502) étant ancrée au substrat par l'intermédiaire d'un bras de guidage (504) formé dans la masse sismique (502) et encastré dans le substrat.

12. Dispositif (100, 200, 600) selon l'une des revendications 1 à 8, le corps d'épreuve comportant au moins un élément résonant (102) en flexion dans le plan du substrat.

13. Dispositif (100, 200, 600) selon la revendication 12, l'élément résonant (102) étant de type poutre ou diapason.

14. Dispositif (100, 200, 600) selon l'une des revendications 12 ou 13, comportant en outre des moyens d'excitation (104) de l'élément résonant (102) de type capacitif, et/ou piézoélectrique, et/ou magnétique et/ou thermoélastique.

15. Dispositif (100, 600) selon l'une des revendications 12 à 14, deux extrémités de l'élément résonant (102) étant ancrées au substrat.

16. Dispositif (200) selon l'une des revendications 12 à 14, le corps d'épreuve comportant en outre au moins une masse sismique (202) mobile dans le plan du substrat, reliée à l'élément résonant (102).

17. Dispositif (200) selon la revendication 16, la masse sismique (202) étant ancrée au substrat par l'intermédiaire d'une charnière (204).

18. Dispositif (200) selon l'une des revendications 16 ou 17, l'élément résonant (102) étant relié à la masse sismique (202) au voisinage d'un encastrement (206) de la masse sismique (202) au substrat.

19. Dispositif (300) selon l'une des revendications 1 à 8, le corps d'épreuve comportant au moins deux masses sismiques (302) mobiles dans le plan du substrat, deux bras de liaison (304) reliés à chacune des deux masses sismiques (302) par l'intermédiaire de bras de flexion (306) destinés à transmettre les mouvements des masses sismiques (302) aux bras de liaison (304), la seconde extrémité du premier bras rigide (106) de la cellule d'amplification de contrainte étant reliée à l'un des bras de liaison (304) au voisinage d'un encastrement dudit bras de liaison (304) au substrat.

20. Dispositif (300) selon la revendication 19, les bras de liaison (304) et les bras de flexion (306) formant un cadre sensiblement rectangulaire.

21. Dispositif (300) selon l'une des revendications 19 ou 20, comportant en outre des moyens d'excitation (308) des masses sismiques (302) de type électrostatiques et/ou thermiques et/ou piézoélectriques.

22. Dispositif (600, 700, 800) selon l'une des revendications précédentes, comportant en outre au moins une seconde cellule d'amplification de contrainte comprenant au moins deux bras rigides (106', 118') reliés mécaniquement l'un à l'autre par au moins un élément de liaison (110') au niveau d'une première de leurs extrémités, une seconde extrémité d'un premier des deux bras rigides (106') étant reliée mécaniquement au corps d'épreuve (102), une seconde extrémité d'un second (118') des deux bras rigides étant ancrée au substrat, l'élément de liaison (110') étant relié mécaniquement à une première extrémité d'une seconde jauge de contrainte piézorésistive suspendue (112') destinée à travailler de manière différentielle en compression ou tension par rapport à la première jauge de contrainte piézorésistive suspendue (112) travaillant respectivement en tension ou en compression.

23. Dispositif (600, 700, 800) selon la revendication 22, comportant en outre au moins deux éléments résistifs (608, 610, 706, 710) et une source de polarisation (612, 708) formant, avec les autres éléments du dispositif (600, 700), un pont de Wheastone.

24. Dispositif (100, 200, 300, 400, 500) selon l'une des revendications 1 à 22, comportant en outre des moyens de mesure (116) de la variation de la résistance de la jauge de contrainte piézorésistive suspendue (112).

25. Dispositif (100, 200, 300, 400, 500, 600, 700, 800) selon l'une des revendications précédentes, la ou les jauges de contrainte piézorésistives suspendues (112, 112') étant disposées perpendiculairement à l'axe de l'effort induit à mesurer.

## Claims

1. Device (100, 200, 300, 400, 500, 600, 700, 800) with piezoresistive detection, comprising at least:
- a proof body (102, 202, 302, 502) on which an effort to be measured is exerted,
- means of detecting a strain exerted by the proof body (102, 202, 302, 502) under the action of the effort, comprising at least one suspended piezoresistive strain gauge (112),
- a strain amplifier cell comprising at least two rigid arms (106, 118) mechanically linked to each other by at least one link element (110) at the level of a first of their ends, a second end of a first (106) of the two rigid arms being mechanically linked to the proof body (102, 202, 302, 502), a second end of a second (118) of the two rigid arms being fixed to a substrate, the link element (110) being mechanically linked to a first end of the suspended piezoresistive strain gauge (112).

2. Device (100, 200, 300, 400, 500, F00, 700, 800) according to claim 1, the suspended piezoresistive strain gauge (112) comprising a second end fixed to the substrate.

3. Device (100, 200, 300, 400, 500, 600, 700, 800) according to one of the previous claims, the suspended piezoresistive strain gauge (112) comprising at least one suspended beam based on a piezoresistive material.

4. Device (100, 200, 300, 400, 600, 700, 800) according to one of the previous claims, the second end of the first rigid arm (106) being connected to the proof body (102, 202, 302) in the vicinity of an embedment (108, 206) of the proof body (102, 202, 302) to the substrate.

5. Device (100, 200, 300, 400, 500, 600, 700, 800) according to one of the previous claims, the link element (110) mechanically linking the two first ends of the two rigid arms (106, 118) comprising at least one pivot link.

6. Device (100, 200, 300, 400, 500, 600, 700, 800) according to one of claims 1 to 4, the link element (110) mechanically linking the first ends of the two rigid arms (106, 118) comprising a fixed link with the first end of the suspended piezoresistive strain gauge (112).

7. Device (100, 200, 300, 400, 500, 600, 700, 800) according to claim 6, each of the first ends of the two rigid arms (106, 118) being mechanically linked to the link element (110) by at least one pivot link.

8. Device (100, 200, 300, 400, 500, 600, 700, 800) according to one of the previous claims, the two rigid arms (106, 118) being symmetrical in relation to a principal axis of the suspended piezoresistive strain gauge (112).

9. Device (200, 300, 400, 500, 700, 800) according to one of the previous claims, the proof body comprising at least one mobile seismic mass (202, 302, 502) in the plane of the substrate, to which is linked the second end of the first rigid arm (106).

10. Device (200, 400, 700, 800) according to claim 9, the seismic mass (202) being fixed to the substrate through the intermediary of a hinge (204).

11. Device (500) according to one of claims 9 or 10, the seismic mass (502) being fixed to the substrate through the intermediary of a guiding arm (504) formed in the seismic mass (502) and embedded in the substrate.

12. Device (100, 200, 600) according to one of claims 1 to 8, the proof body comprising at least one resonant element (102) flexing in the plane of the substrate.

13. Device (100, 200, 600) according to claim 12, the resonant element (102) being of beam or diapason type.

14. Device (100, 200, 600) according to one of claims 12 or 13, further comprising excitation means (104) of the resonant element (102) of capacitive, and/or piezoelectric, and/or magnetic and/or thermoelastic type.

15. Device (100, 600) according to one of claims 12 to 14, two ends of the resonant element (102) being fixed to the substrate.

16. Device (200) according to one of claims 12 to 14, the proof body further comprising at least one mobile seismic mass (202) in the plane of the substrate, linked to the resonant element (102).

17. Device (200) according to claim 16, the seismic mass (202) being fixed to the substrate through the intermediary of a hinge (204).

18. Device (200) according to one of claims 16 or 17, the resonant element (102) being linked to the seismic mass (202) in the vicinity of an embedment (206) of the seismic mass (202) to the substrate.

19. Device (300) according to one of claims 1 to 8, the proof body comprising at least two mobile seismic masses (302) in the plane of the substrate, two link arms (304) linked to each of the two seismic masses (302) through the intermediary of flexing arms (306) intended to transmit the movements of the seismic masses (302) to the link arms (304), the second end of the first rigid arm (106) of the strain amplifier cell being linked to one of the link arms (304) in the vicinity of an embedment of said link arms (304) to the substrate.

20. Device (300) according to claim 19, the link arms (304) and the flexing arms (306) forming a substantially rectangular frame.

21. Device (300) according to one of claims 19 or 20, further comprising excitation means (308) of seismic masses (302) of electrostatic and/or thermal and/or piezoelectric type.

22. Device (600, 700, 800) according to one of the previous claims, further comprising at least one second strain amplifier cell comprising at least two rigid arms (106', 118') mechanically linked to each other by at least one link element (110') at the level of a first of their ends, a second end of a first of the two rigid arms (106') being mechanically linked to the proof body (102), a second end of a second (118') of the two rigid arms being fixed to the substrate, the link element (110') being mechanically linked to a first end of a second suspended piezoresistive strain gauge (112') intended to work in differential manner in compression or tension in relation to the first suspended piezoresistive strain gauge (112) working respectively in tension or in compression.

23. Device (600, 700, 800) according to claim 22, further comprising at least two resistive elements (608, 610, 706, 710) and a polarisation source (612, 708) forming, with the other elements of the device (600, 700), a Wheatstone bridge.

24. Device (100, 200, 300, 400, 500) according to one of claims 1 to 22, further comprising means of measuring (116) the variation in the resistance of the suspended piezoresistive strain gauge (112).

25. Device (100, 200, 300, 400, 500, 600, 700, 800) according to one of the previous claims, the suspended piezoresistive strain gauge(s) (112, 112') being arranged perpendicularly to the axis of the induced effort to be measured.

## Patentansprüche

1. Piezoresistive Sensorvorrichtung (100, 200, 300, 400, 500, 600, 700, 800), umfassend wenigstens:
- einen Messkörper (102, 202, 302, 502), an welchem eine Kraft wirkt, die zu messen ist,
- Mittel zum Detektierten einer Beanspruchung, welche durch den Messkörper (102, 202, 302, 502) unter der Winkung der Kraft ausgeübt wird, umfassend wenigstens einen aufgehängten piezoresistiven Dehnungsmesser (112),
- eine Dehnungsverstärkungszelle, welche wenigstens zwei starre Stäbe (106, 118) umfasst, die miteinander durch wenigstens ein Verbindungselement (110), auf Höhe eines ersten der Enden derselben, mechanisch verbunden sind, wobei ein zweites Ende eines ersten (106) der zwei starren Stäbe mit dem Messkörper (102, 202, 302, 502) mechanisch verbunden ist, wobei ein zweites Ende eines zweiten (118) der zwei starren Stäbe an einem Substrat verankert ist, wobei das Verbindungselement (110) mit einem ersten Ende des aufgehängten piezoresistiven Dehnungsmessers (112) mechanisch verbunden ist.

2. Vorrichtung (100, 200, 300, 400, 500, 600, 700, 800) nach Anspruch 1, wobei der aufgehängte piezoresistive Dehnungsmesser (112) ein zweites Ende aufweist, welches am Substrat verankert ist.

3. Vorrichtung (100, 200, 300, 400, 500, 600, 700, 800) nach einem der vorhergehenden Ansprüche, wobei der aufgehängte piezoresistive Dehnungsmesser (112) wenigstens einen aufgehängten Balken auf Basis eines piezoresistiven Materials umfasst.

4. Vorrichtung (100, 200, 300, 400, 600, 700, 800) nach einem der vorhergehenden Ansprüche, wobei das zweite Ende des ersten starren Stabs (106) mit dem Messkörper (102, 202, 302) verbunden ist, benachbart einer Einspannung (108, 206) des Messkörpers (102, 202, 302) am Substrat.

5. Vorrichtung (100, 200, 300, 400, 500, 600, 700, 800) nach einem der vorhergehenden Ansprüche, wobei das Verbindungselement (110), welches die zwei ersten Enden der zwei starren Stäbe (106, 118) mechanisch verbindet, wenigstens eine Drehverbindung aufweist.

6. Vorrichtung (100, 200, 300, 400, 500, 600, 700, 800) nach einem der Ansprüche 1 bis 4, wobei das Verbindungselement (110), welches die ersten Enden der zwei starren Stäbe (106, 118) mechanisch verbindet, eine feste Verbindung mit dem ersten Ende des aufgehängten piezoresistiven Dehnungsmessers (112) aufweist.

7. Vorrichtung (100, 200, 300, 400, 500, 600, 700, 800) nach Anspruch 6, wobei jedes der ersten Enden der zwei starren Stäbe (106, 118) mit dem Verbindungselement (110) durch wenigstens eine Drehverbindung mechanisch verbunden ist.

8. Vorrichtung (100, 200, 300, 400, 500, 600, 700, 800) nach einem der vorhergehenden Ansprüche, wobei die zwei starren Stäbe (106, 118) symmetrisch sind, bezogen auf eine Hauptachse des aufgehängten piezoresistiven Dehnungsmessers (112).

9. Vorrichtung (200, 300, 400, 500, 700, 800) nach einem der vorhergehenden Ansprüche, wobei der Messkörper wenigstens eine seismische Masse (202, 302, 502) umfasst, welche in der Ebene des Substrats beweglich ist, wobei das zweite Ende des ersten starren Stabs (106) mit derselben verbunden ist.

10. Vorrichtung (200, 400, 700, 800) nach Anspruch 9, wobei die seismische Masse (202) am Substrat mittels eines Scharniers (204) verankert ist.

11. Vorrichtung (500) nach einem der Ansprüche 9 oder 10, wobei die seismische Masse (502) am Substrat mittels einer Führung (504) verankert ist, welche in der seismischen Masse (502) ausgebildet und im Substrat eingespannt ist.

12. Vorrichtung (100, 200, 600) nach einem der Ansprüche 1 bis 8, wobei der Messkörper wenigstens ein Resonanzelement (102) für eine Biegeschwingung in der Ebene des Substrats umfasst.

13. Vorrichtung (100, 200, 600) nach Anspruch 12, wobei das Resonanzelement (102) vom Typ eines Balkens oder einer Stimmgabel ist.

14. Vorrichtung (100, 200, 600) nach einem der Ansprüche 12 oder 13, ferner umfassend Mittel zur Anregung (104) des Resonanzelements (102) vom kapazitiven und/oder piezoelektrischen und/oder magnetischen und/oder thermoelastischen Typ.

15. Vorrichtung (100, 600) nach einem der Ansprüche 12 bis 14, wobei die zwei Enden des Resonanzelements (102) am Substrat verankert sind.

16. Vorrichtung (200) nach einem der Ansprüche 12 bis 14, wobei der Messkörper ferner wenigstens eine seismische Masse (202) umfasst, welche in der Ebene des Substrats beweglich ist, wobei sie mit dem Resonanzelement (102) verbunden ist.

17. Vorrichtung (200) nach Anspruch 16, wobei die seismische Masse (202) am Substrat mittels eines Scharniers (204) verankert ist.

18. Vorrichtung (200) nach einem der Ansprüche 16 oder 17, wobei das Resonanzelement (102) mit der seismischen Masse (202) verbunden ist, benachbart einer Einspannung (206) der seismischen Masse (202) am Substrat.

19. Vorrichtung (300) nach einem der Ansprüche 1 bis 8, wobei der Messkörper wenigstens zwei seismische Massen (302) umfasst, welche in der Ebene des Substrats beweglich sind, wobei zwei Verbindungsglieder (304) mit jeder der zwei seismischen Massen (302) mittels Biegestäben (306) verbunden sind, die dazu bestimmt sind, die Bewegungen der seismischen Massen (302) auf die Verbindungsglieder (304) zu übertragen, wobei das zweite Ende des ersten starren Stabs (106) der Dehnungsverstärkungszelle mit einem der Verbindungsglieder (304) verbunden ist, benachbart einer Einspannung des Verbindungsglieds (304) am Substrat.

20. Vorrichtung (300) nach Anspruch 19, wobei die Verbindungsglieder (304) und die Biegestäbe (306) einen im Wesentlichen rechteckigen Rahmen bilden.

21. Vorrichtung (300) nach einem der Ansprüche 19 oder 20, ferner umfassend Mittel zur Anregung (308) der seismischen Massen (302) vom elektrostatischen und/oder thermischen und/oder piezoelektrischen Typ.

22. Vorrichtung (600, 700, 800) nach einem der vorhergehenden Ansprüche, ferner umfassend wenigstens eine zweite Dehnungsverstärkungszelle, welche wenigstens zwei starre Stäbe (106', 118') umfasst, die miteinander durch wenigstens ein Verbindungselement (110') auf Höhe eines ersten der Enden derselben mechanisch verbunden sind, wobei ein zweites Ende eines ersten der zwei starren Stäbe (106') mit dem Meßkörper (102) mechanisch verbunden ist, wobei ein zweites Ende eines zweiten (118') der zwei starren Stäbe am Substrat verankert ist, wobei das Verbindungselement (110') mit einem ersten Ende eines zweiten aufgehängten piezoresistiven Dehnungsmessers (112') mechanisch verbunden ist, welcher dazu bestimmt ist, in differenzbildender Weise auf Druck oder Zug zu funktionieren, bezogen auf den ersten aufgehängten piezoresistiven Dehnungsmesser (112), welcher jeweils auf Zug oder auf Druck funktioniert.

23. Vorrichtung (600, 700, 800) nach Anspruch 22, ferner umfassend wenigstens zwei resistive Elemente (608, 610, 706, 710) und eine Spannungsquelle (612, 708), welche zusammen mit den anderen Elementen der Vorrichtung (600, 700) eine Wheatstone-Brücke bilden.

24. Vorrichtung (100, 200, 300, 400, 500) nach einem der Ansprüche 1 bis 22, ferner umfassend Mittel zum Messen (116) der Änderung des Widerstands des aufgehängten piezoresistiven Dehnungsmessers (112).

25. Vorrichtung (100, 200, 300, 400, 500, 600, 700, 800) nach einem der vorhergehenden Ansprüche, wobei der oder die aufgehängte(n) piezoresistive(n) Dehnungsmesser (112, 112') rechtwinkelig zu der Achse der induzierten Kraft, die zu messen ist, angeordnet ist/sind.
